# FASCICULE DE BREVET EUROPEEN

(11) **EP 3 983 170 B1**
(45) Date de publication et mention de la délivrance du brevet: **05.07.2023**
(21) Numéro de dépôt: 20719434.1
(22) Date de dépôt: 17.04.2020
(51) Int. Cl.: B23Q 1/70, B06B 1/06, B23B 37/00, B23B 47/34, B23Q 1/34, B23Q 5/28, B23Q 5/32

(54) **BROCHE A ACTIONNEURS PIEZOELECTRIQUES**
SPINDEL MIT PIEZOELEKTRISCHEN AKTUATOREN
SPINDLE WITH PIEZOELECTRIC ACTUATORS

(30) Priorité: 14.06.2019 FR 1906380
(43) Date de publication de la demande: 20.04.2022
(73) Titulaire: Mitis, 44340 Bouguenais (FR)
(72) Inventeur: LAPORTE, Sylvain, 44700 ORVAULT (FR)
(74) Mandataire: Cabinet Nony
(86) Numéro de dépôt international: PCT/EP2020/060815
(87) Numéro de publication internationale: WO 2020/249288

(56) Documents cités:
- DE-U1-202016 102 124
- US-A1- 2017 136 552

## Description

### Domaine technique

La présente invention concerne une broche pour machine-outil ou robot, selon le préambule de la revendication 1 (voir par exemple US 2017/136552 A1).

### Technique antérieure

Les machines-outils, en particulier celles dites à commande numérique, comportent un support mobile, notamment dans les trois directions, portant une électro-broche, qui est une broche équipée d'un moteur et d'un porte-outil, afin de l'entraîner en rotation autour de son axe.

Il a déjà été proposé de soumettre un outil entraîné en rotation à des vibrations ultrasonores (« Ultrasonic Machining » ou UM) pour accroître l'efficacité de l'outil et permettre de percer des matériaux durs tels que le verre. Les vibrations ultrasonores permettent de créer du cisaillement sur la coupe mais n'ont pas d'influence notable sur l'épaisseur et l'évacuation des copeaux.

La demande US 2011/0222975 décrit un module UM comportant un transducteur agencé pour recevoir l'outil. Ce transducteur est alimenté par des contacts électriques tournants.

Le brevet US 3561462 décrit un autre exemple de broche UM comportant un excitateur ultrasonore opérant à une fréquence de l'ordre de 16 à 20 kHz, nécessitant également des contacts tournants.

Le brevet US 8240396 divulgue une autre broche UM comportant des éléments piézoélectriques tournants, avec une fréquence d'excitation allant de 17 à 60 kHz.

Par ailleurs, il est connu d'utiliser des actionneurs piézoélectriques au sein de broches pour réaliser une précharge variable, afin de compenser des contraintes mécaniques apparaissant en fonctionnement dans des roulements, du fait de la dilatation due à l'élévation de température en fonctionnement.

Le brevet US 6422757 et la demande EP 1004783 divulguent ainsi des broches équipées d'un actionneur piézoélectrique dans ce but. La demande EP 1004783 enseigne d'utiliser l'actionneur piézoélectrique en combinaison avec un vérin afin d'augmenter la course axiale de compensation de la précharge.

Par ailleurs, il est connu de soumettre pendant une opération de perçage l'outil à des oscillations axiales dont la fréquence est liée à la fréquence de rotation. Ces oscillations axiales sont de fréquence bien plus basse que dans le cas de l'usinage ultrasonore UM et visent essentiellement à fragmenter les copeaux qui sont générés par l'outil au cours de sa rotation.

Classiquement, la fréquence de ces oscillations axiales va de 5 Hz à 500 Hz, selon la vitesse de rotation.

Il a déjà été proposé de générer ces oscillations à l'aide d'un actionneur piézoélectrique dans la demande WO 2017/087377 A1. Toutefois, cette publication reste succincte dans la mise en oeuvre.

US2016/0129505 décrit un système permettant de réaliser une avance de l'outil automatiquement en fonction de sa rotation, équipé d'un actionneur électromécanique, qui peut être piézoélectrique, pour superposer au mouvement d'avance des oscillations axiales. Cette demande reste silencieuse sur l'implémentation pratique de l'actionneur piézoélectrique.

Or, l'utilisation d'éléments piézoélectriques pour générer d'une manière fiable des oscillations axiales et modifier la trajectoire instantanée de l'outil afin de fragmenter des copeaux pose de nombreux problèmes qui doivent être résolus d'une façon compatible avec l'utilisation industrielle de la broche.

Tout d'abord, les éléments piézoélectriques sont relativement fragiles et nécessitent de travailler sous charge ; il est donc nécessaire de prévoir un système de charge adéquat.

Ensuite, l'élongation d'un élément piézoélectrique lorsqu'excité électriquement est relativement faible, de l'ordre de 1/1000, alors que l'amplitude des oscillations axiales nécessaire pour obtenir la fragmentation d'un copeau n'est pas négligeable. Il faut donc trouver un moyen pour obtenir l'amplitude requise. De plus, un actionneur piézoélectrique de grande longueur est soumis à un risque de flambage sous contrainte axiale élevée.

Par ailleurs, l'énergie thermique dissipée par un actionneur piézoélectrique aux fréquences élevées n'est pas négligeable et doit être évacuée.

Enfin, l'alimentation électrique des éléments piézoélectriques pose également une difficulté, car elle doit être fiable dans la durée et ne pas soulever de problèmes de maintenance.

Indépendamment des problèmes liés à l'utilisation d'actionneurs piézoélectriques, la broche se doit de rester suffisamment compacte pour pouvoir être utilisée sur une machine-outil à commande numérique, et elle doit pouvoir opérer sur une plage de vitesses de rotation la plus étendue possible, de préférence jusqu'à 15000 ou 18000 tr/min, afin de pouvoir répondre au plus grand nombre d'applications.

Or, dans le cas de l'évacuation des copeaux, la fréquence des oscillations axiales est liée à la fréquence de rotation et augmente avec cette dernière. Toutefois, aux fréquence élevées, l'inertie des pièces en mouvement entraîne une augmentation significative de la puissance nécessaire à la génération des oscillations axiales.

Il existe par conséquent un besoin pour disposer d'une broche permettant de générer des oscillations axiales à l'aide d'éléments piézoélectriques, répondant à ces diverses contraintes.

### Exposé de l'invention

L'invention vise ainsi à utiliser des éléments piézoélectriques pour générer des oscillations axiales non ultrasoniques au sein d'une broche (qui est de préférence une électro-broche) afin d'améliorer les performances de l'usinage et notamment améliorer l'évacuation des copeaux.

### Résumé de l'invention

L'invention vise à répondre à ce besoin et a pour objet, selon un premier de ses aspects, une broche pour réaliser un usinage assisté par des oscillations axiales non ultrasoniques, comportant :
- un arbre porte outil, et
- une partie excitatrice, pour soumettre l'arbre à des oscillations axiales non ultrasoniques, notamment durant sa rotation, cette partie excitatrice comportant :
   ∘ un premier étage excitateur, comportant au moins un actionneur piézoélectrique,
   ∘ un deuxième étage excitateur, comportant au moins un actionneur piézoélectrique, ayant un recouvrement axial non nul avec le premier étage excitateur, les actionneurs des deux étages étant disposés de façon à additionner leurs effets.

Les deux étages peuvent être couplés par un organe de liaison contre lequel les actionneurs de chaque étage prennent appui à une extrémité, de telle sorte que les actionneurs d'un étage aient une extrémité, en appui sur cet organe de liaison, qui est fixe par rapport à une extrémité des actionneurs de l'autre étage, en appui également sur cet organe de liaison, de façon à ce que l'élongation des actionneurs du premier étage s'ajoute à celle des actionneurs du deuxième étage.

Dans une mise en oeuvre préférée de l'invention, la broche comporte :
- un corps,
- un palier avant au moins partiellement mobile axialement relativement au corps,
- un palier arrière au moins partiellement mobile axialement relativement au corps,
- l'arbre porte outil étant mobile axialement relativement au corps, le déplacement axial au moins partiel des paliers s'accompagnant d'un déplacement axial de l'arbre porte outil,
- le premier étage excitateur, statique de préférence, agissant entre un organe de liaison intermédiaire et le corps,
- le deuxième étage excitateur, statique de préférence, agissant entre l'un des paliers et l'organe de liaison intermédiaire.

Par « statique » il faut comprendre non tournant relativement au corps, par opposition à la rotation de l'outil relativement au corps. « Statique » est ainsi synonyme ici de « non rotatif ».

Par « non ultrasonique » il faut comprendre que la fréquence des oscillations axiales est bien en deçà de celles de l'usinage assisté par ultrasons (« Ultrasonic Machining »), donc bien en dessous de 16kHz. L'effet des oscillations axiales est dans l'invention de modifier la trajectoire instantanée de l'outil pour fragmenter des copeaux.

Par « palier avant » on désigne le palier le plus proche de l'outil. Par « palier » il faut comprendre la ou les pièces qui assurent la fonction de guidage en rotation de l'arbre. Le palier peut ainsi comprendre des roulements et le support de ces roulements pour les maintenir relativement au corps de la broche.

Par « recouvrement axial non nul » il faut comprendre que les actionneurs piézoélectriques occupent au moins une plage d'abscisses commune le long de l'axe longitudinal de la broche.

Les deux étages d'actionneurs peuvent additionner leurs effets lorsqu'excités électriquement, en ce sens que l'élongation des actionneurs de l'un des étages peut s'ajouter à celle des actionneurs de l'autre étage.

Les actionneurs du deuxième étage peuvent s'interposer axialement entre l'un des paliers et l'organe de liaison intermédiaire. Les actionneurs du premier peuvent s'interposer axialement entre l'organe de liaison intermédiaire et le corps.

L'invention permet de résoudre d'une façon particulièrement élégante et efficace les nombreux problèmes exposés plus haut que pose l'utilisation d'éléments piézoélectriques au sein d'une broche.

Tout d'abord, le recouvrement axial entre les étages excitateurs permet de garder un encombrement longitudinal de la broche compatible avec l'utilisation dans les machines à commande numérique, tout en ayant des longueurs d'actionneurs piézoélectriques suffisantes pour obtenir l'amplitude recherchée pour les oscillations axiales.

Ensuite, la présence des deux étages permet de n'en exciter qu'un seul aux fréquences de rotation élevées, afin de réduire le nombre de pièces en mouvement et l'inertie correspondante, donc l'énergie nécessaire. Cela permet, pour une puissance donnée, de pouvoir générer des oscillations axiales à une fréquence plus élevée.

L'encombrement longitudinal limité de la partie excitatrice selon l'invention permet aussi d'intégrer aisément un moteur électrique dans la broche afin d'en faire une électro-broche.

Le corps de la broche peut être formé d'une ou plusieurs pièces assemblées entre elles.

De préférence, chaque étage de la partie excitatrice comporte plusieurs actionneurs piézoélectriques, par exemple entre 2 et 4, notamment 3. Ces actionneurs sont avantageusement identiques et d'axes longitudinaux parallèles entre eux et à l'axe de rotation.

De préférence, les actionneurs piézoélectriques d'un étage alternent, de manière angulairement équirépartie, autour de l'axe longitudinal de la broche, avec ceux de l'autre étage. Cela permet de bien répartir les efforts.

De préférence, la broche comporte un système de précharge axiale pour solliciter l'arbre porte-outil en déplacement axial inverse de celui provoqué par l'excitation des actionneurs. Ceci permet de maintenir en compression les éléments piézoélectriques.

Ce système de précharge peut s'interposer axialement entre le corps et l'un des paliers, de préférence le palier avant. En variante, il s'interpose entre le corps et le palier arrière.

Le système de précharge peut comporter au moins un organe de rappel élastique travaillant en compression, et comporter par exemple plusieurs ensembles de rondelles élastiques disposés dans des logements d'une pièce fixe relativement au corps de la broche. Chaque ensemble peut venir en appui à une extrémité dans le fond du logement. Le système de précharge peut comporter au moins un tirant relié à une extrémité à l'un des paliers, de préférence le palier avant, et venant en appui à l'autre extrémité contre l'ensemble de rondelles du coté de l'ouverture dudit logement. Ainsi, l'ensemble de rondelles élastiques travaille en compression pour solliciter le palier dans le sens d'une compression des actionneurs piézoélectriques.

Dans une variante, le système de précharge comporte des ressorts travaillant en traction. Ces ressorts sont par exemple accrochés à une extrémité en un point fixe relativement au corps, et à l'autre extrémité à l'un des paliers, de préférence le palier avant, pour le solliciter en appui contre les actionneurs piézoélectriques et ainsi soumettre ces derniers à une force de compression axiale.

L'organe de liaison intermédiaire comporte de préférence des logements alternativement ouverts vers une extrémité axiale de la broche et vers l'extrémité opposée, les actionneurs piézoélectriques étant reçus dans ces logements. Cet organe de liaison peut être monobloc ou formé par l'assemblage de plusieurs pièces. Au sein de chaque logement, l'actionneur piézoélectrique correspondant peut venir en appui axial dans une pièce munie d'un joint torique de centrage, disposée dans le fond du logement.

De préférence, l'un au moins des paliers, et mieux chaque palier, comporte au moins un roulement maintenu par un support flexible pouvant fléchir sous l'effet de la force générée par les actionneurs piézoélectriques pour permettre un déplacement axial de l'arbre, tout en maintenant la position radiale du roulement inchangée relativement au corps.

L'utilisation de tels supports est avantageuse, car elle réduit l'inertie des pièces à mettre en mouvement axialement pour produire les oscillations axiales, et limite l'utilisation de roulements ou autres moyens de guidage.

Le support flexible présente avantageusement une structure lamellaire avec des lamelles orientées transversalement, notamment perpendiculairement, à l'axe de rotation de l'arbre. Ces lamelles sont avantageusement réalisées par découpage de tôles. Leur épaisseur va par exemple de 0.1 à 1 mm et leur nombre de 10 à 50 par support.

On peut donner aux supports des formes diverses, afin notamment d'accroître la flexibilité et/ou permettre le passage de tirants, câbles ou flux d'air de refroidissement. On peut aussi réaliser des ajours au sein des supports de manière à donner plus de flexibilité.

On peut prévoir des vis de centrage appuyant sur les supports de façon à affiner leur centrage, le cas échéant.

Chaque support peut être fixé d'une part au corps en des points de fixation, et d'autre part, en des emplacements décalés angulairement desdits points de fixation autour de l'axe de rotation de l'arbre, à un boîtier de roulements.

Par exemple, les supports présentent en vue de face une forme généralement triangulaire, permettant une fixation au corps de la broche au niveau des sommets du triangle et la fixation du boîtier de roulements du palier à mi-longueur des côtés du triangle. Dans une variante, les supports présentent une forme ondulée dans le sens circonférentiel.

De préférence, chaque palier comporte deux supports flexibles disposés de part et d'autre du ou des roulements.

Chaque palier comporte de préférence deux roulement à billes, disposés côte-à-côte.

Chaque étage d'actionneurs piézoélectriques comporte de préférence entre 2 et 4 actionneurs, mieux 3 actionneurs.

Chaque actionneur piézoélectrique peut transmettre sa poussée, à l'une au moins de ses extrémités axiales, via une pièce de transmission flexible, par exemple en forme de T ayant une partie élargie en section, l'actionneur piézoélectrique venant en appui sur cette pièce flexible, notamment sur la partie élargie de la pièce. La partie allongée de la pièce autorise, par sa flexibilité, un rotulage. En variante, un système de transmission comportant une portée sphérique est utilisé. L'avantage de la pièce de transmission en forme de T est sa simplicité d'usinage, comparativement à une portée sphérique. Les extrémités opposées des actionneurs peuvent être reçues dans des pièces de centrage pourvues d'un joint torique s'appliquant sur la surface extérieure des actionneurs, comme mentionné plus haut.

De préférence, les actionneurs piézoélectriques sont refroidis par une circulation d'air comprimé.

La broche peut comporter un manchon formant entretoise, entourant les actionneurs piézoélectriques, le palier avant venant axialement en appui contre ce manchon. Cela simplifie le montage du palier. Ce manchon peut présenter des rainures longitudinales sur sa surface radialement extérieure, dans lesquelles des câbles électriques d'alimentation des actionneurs et/ou reliés à des capteurs, sont engagés. Le manchon, lorsque métallique, peut offrir un blindage supplémentaire vis-à-vis du rayonnement électromagnétique généré par les actionneurs piézoélectriques, notamment vis-à-vis des câbles qui passent à l'intérieur desdites rainures et sont reliés par exemple à des capteurs.

La broche peut comporter un système de desserrage pour agir sur le serrage du porte-outil, ce système de desserrage étant de préférence disposé entre le moteur et les actionneurs piézoélectriques. Le système de desserrage peut être pneumatique et comporter plusieurs chambres de pression successives, par exemple trois chambres, afin d'obtenir une plus grande force d'actionnement pour une pression donnée. Cela permet de diminuer l'encombrement radial du système de desserrage, et facilite son implantation entre les étages excitateurs et le moteur. Un tel positionnement du moteur en arrière du système de desserrage simplifie la réalisation du moteur, dont l'arbre peut être plein, à l'exception d'un canal d'amenée d'huile de coupe, qui peut aussi être réalisé plus aisément.

L'invention a encore pour objet, selon un autre de ses aspects, un procédé de perçage ou d'usinage de forme, dans lequel on entraîne en rotation un outil à l'aide de la broche selon l'invention, et dans lequel on soumet l'outil simultanément à sa rotation à des oscillations axiales non ultrasoniques, en excitant périodiquement les actionneurs piézoélectriques.

Les deux étages d'actionneurs peuvent être excités simultanément. Cela permet de disposer d'une amplitude maximale d'oscillations axiales, les élongations des actionneurs se cumulant.

De préférence, les actionneurs sont excités par une tension sinusoïdale. La fréquence des oscillations axiales peut être comprise entre 0 et 350 Hz.

Chaque étage d'actionneurs peut être alimenté par un étage de puissance qui lui est propre.

Il est également possible que seul un étage d'actionneurs soit excité, en particulier celui agissant entre le palier avant et l'organe de liaison. Cela permet de fonctionner pour une puissance donnée à une fréquence d'excitation supérieure, en diminuant l'inertie des pièces mises en mouvement axialement lors de ces oscillations.

Dans ce cas, l'étage d'actionneurs qui n'oscille pas peut être non alimenté ou alimenté avec une tension fixe choisie pour amener une compensation plus fine du déplacement du rotor.

La broche peut être montée sur une machine à commande numérique ou un effecteur.

La broche est alors classiquement déplacée axialement durant le perçage ou l'usinage de forme, et l'avance au tour de la broche et l'amplitude crête à crête des oscillations axiales sont du même ordre de grandeur (c'est-à-dire que l'on a au plus un facteur 10 entre les deux).

Le procédé peut être un procédé de perçage assisté par vibrations non ultrasoniques d'un métal, notamment de l'aluminium ou du titane ou d'autres métaux ou matériaux, pendant lequel les paramètres vibratoires pourront être ajustés (amplitude et fréquence).

Le procédé peut encore être un usinage de forme, notamment fraisure ou lamage. Dans ce cas, les oscillations axiales peuvent être interrompues avant la fin de l'avance de l'outil.

Il est également possible de générer des oscillations axiales sans rotation pour par exemple effectuer une mesure d'amplitude sur l'outil ou aider à l'enlèvement de ce dernier.

### Brève description des dessins

L'invention pourra être mieux comprise à la lecture de la description qui va suivre, d'exemples non limitatifs de mise en oeuvre de celle-ci, et à l'examen du dessin annexé, sur lequel :
[Fig 1] La figure 1 est un schéma cinématique d'un exemple de broche selon l'invention,
[Fig 2] la figure 2 représente de façon schématique et en perspective un exemple de broche selon l'invention,
[Fig 3] la figure 3 est une vue analogue à la figure 2 avec coupe partielle,
[Fig 4] la figure 4 est une vue analogue à la figure 3, dans d'autres plans de coupe,
[Fig 5] la figure 5 est une coupe longitudinale de la broche,
[Fig 6] la figure 6 est une vue analogue à la figure 5 dans un plan de coupe perpendiculaire à celui de la figure 5,
[Fig 7] la figure 7 représente isolément en vue de face l'un des supports des roulements,
[Fig 8] la figure 8 représente isolément une partie du bâti de la broche,
[Fig 9] la figure 9 est une vue en perspective, schématique et partielle, d'une variante de réalisation de la broche,
[Fig 10] la figure 10 est une vue analogue à la figure 9 avec coupe partielle,
[Fig 11] la figure 11 représente isolément en coupe axiale l'organe de liaison entre les deux étages d'actuateurs piézoélectriques, et
[Fig 12] la figure 12 est une vue analogue à la figure 7 d'une variante de réalisation du support d'un palier.

### Description détaillée

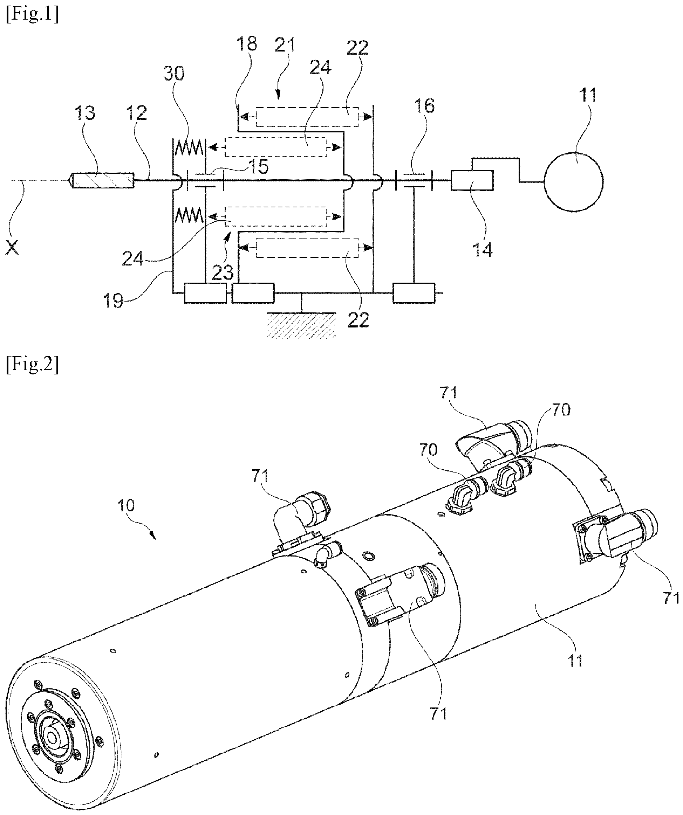

On va décrire en référence à la figure 1 un exemple de broche 10 selon l'invention.

La broche 10 est ici une électro-broche, car elle intègre un moteur électrique 11, par exemple un moteur synchrone à aimants permanents.

Ce moteur 11 entraîne en rotation un arbre 12 par une liaison 14 permettant un certain débattement axial avec celui-ci, suffisant pour permettre à l'arbre d'osciller axialement selon son axe longitudinal avec l'amplitude souhaitée.

L'arbre 12 entraîne à son extrémité opposée au moteur 11 un porte-outil 13, qui peut recevoir tout type d'outil, par exemple un foret ou tout autre outil destiné à un usinage de forme par exemple, représenté schématiquement à la figure 1.

L'interface entre le porte-outil et l'outil peut être de type pince, et être réalisée selon divers standards normalisés ou propriétaires, par exemple être de type ER ou D, entre autres.

Le maintien de l'outil sur le porte-outil peut encore s'effectuer par serrage hydraulique, par frettage thermique, par frettage mécanique ou par transmission par obstacle, de type Weldon ou Wissonnotch, entre autres.

L'interface entre le porte-outil et la broche peut de même relever de normes ou de standards propriétaires, par exemple être de type HSK, BIG, CAPTO, BT ou ISO (SK40) ou utiliser des cônes Morse, cette liste n'étant pas limitative.

L'interface entre la broche et la machine à commande numérique peut s'effectuer par serrage ou de toute autre manière adaptée.

Des paliers avant 15 et arrière 16 guident l'arbre 12 en rotation tout en permettant d'effectuer un mouvement axial.

Ces paliers 15 et 16 sont mobiles axialement, au moins au niveau de l'arbre 12, par rapport au corps 19 de la broche 10.

Cette dernière comporte un premier étage excitateur 21 comportant plusieurs actionneurs piézoélectriques 22 agissant parallèlement entre le corps 19 et un organe de liaison 18 mobile relativement au corps 19 et un deuxième étage excitateur 23 comportant plusieurs actionneurs piézoélectriques 24 agissant entre l'organe de liaison 18 et l'un des paliers, en l'espèce le palier avant 15 dans l'exemple considéré.

Un système élastique de précharge 30 s'interpose axialement entre le corps 19 et l'un des paliers, en l'espèce le palier avant 15, pour maintenir les actionneurs piézoélectriques 22 et 24 avec la précontrainte nécessaire.

Comme on peut le voir sur la figure 1, l'organe de liaison 18 est agencé pour permettre un certain recouvrement axial des actionneurs piézoélectriques selon l'axe longitudinal X de la broche 10.

Les actionneurs 22 et 24 ne tournent pas relativement au corps 19, ce qui simplifie leur alimentation électrique et permet d'éviter l'emploi de collecteurs tournants.

Ils sont reliés à un système de commande délivrant une tension variable afin de les amener à osciller en lien avec la rotation de l'arbre 12, de façon à avoir une trajectoire suffisamment précise de l'outil en fonction de l'application recherchée.

Les actionneurs 22 et 24 sont alimentés par exemple par deux amplificateurs respectifs. Aux basses fréquences de rotation, les actionneurs 22 et 24 sont tous alimentés et leurs élongations se cumulent, ce qui permet d'obtenir une amplitude maximale d'oscillation axiale de l'outil. Les actionneurs 22 et 24 sont de préférence excités avec une tension sinusoïdale, de fréquence et de phase choisies en fonction de la fréquence de rotation de l'outil et de sa phase angulaire.

Aux fréquences de rotation plus élevées, afin de diminuer l'inertie des pièces en mouvement, seul le deuxième étage 23, le plus proche du palier avant, est excité, et l'organe de liaison 18 est immobile axialement.

La broche 10 selon l'invention vérifie de préférence les relations suivantes.
- Fréquence des oscillations axiales générées par les actionneurs piézoélectriques : 0 à 500 Hz, mieux 0 à 350 Hz,
- fréquence de rotation ωᵣₒₜₐₜᵢₒₙ de l'outil: 0 à 18000 tr/min,
- amplitude crête à crête des oscillations axiales : 0 à 0,25 mm, mieux 0,02 à 0,25 mm,
- le ratio des fréquences ω_{oscillations axiales}/ωᵣₒₜₐₜᵢₒₙ est de préférence non entier, et vaut par exemple 1/2, 3/2, 5/2 ou 7/2,
- si f désigne l'avance au tour, c'est-à-dire le déplacement axial d'ensemble de la broche pour une rotation de 360° de l'outil, on a de préférence 1/10 f *< a <* 10 f, où *a* désigne l'amplitude crête à crête des oscillations axiales.
- f est de préférence compris entre 0,01 et 0,5mm.

Le système de commande des actionneurs piézoélectriques peut être agencé pour permettre une activation des oscillations axiales sur toute la phase d'usinage ou en variante sur une partie seulement de celle-ci, avec désactivation des oscillations sur la fin de l'usinage, conformément au procédé objet du brevet EP2790860 de la demanderesse.

Sur le schéma illustré à la figure 1, les paliers 15 et 16 sont mobiles axialement relativement au corps 19. Les paliers 15 et 16 peuvent être réalisés de manière à présenter une partie déformable permettant un déplacement axial de l'arbre tout en guidant précisément celui-ci en rotation, comme cela sera décrit plus loin.

On a représenté sur les figures 2 à 6 un exemple de broche 10 réalisée conformément à l'invention.

Cette broche 10 est une électro-broche, son moteur 11 étant logé dans un carter pourvu de divers raccords fluidiques (liquide et/ou gaz) 70 et électriques 71, qui assurent le refroidissement de la broche, l'alimentation électrique du moteur et des actionneurs piézoélectriques, la commande du porte-outil et l'échange des signaux avec différents capteurs. En particulier, la broche comporte dans l'exemple considéré des raccords arrivée et départ d'eau de refroidissement du moteur et une arrivée d'air comprimé de refroidissement des actionneurs piézoélectriques.

Dans cet exemple, le palier avant 15 comporte deux roulements à billes 80 et 81, venant en butée axialement à une extrémité contre un épaulement 82 de l'arbre 12 et à l'autre extrémité contre un boîtier 83. Ce dernier est fixé par des vis 86 contre deux supports 84 disposés de part et d'autre du boîtier 83.

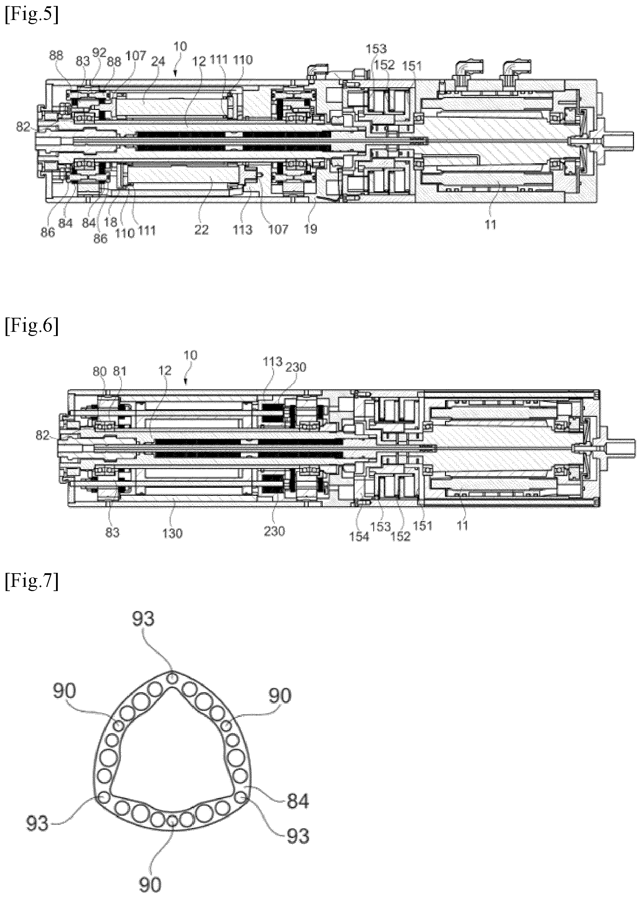

Chaque support 84 est formé d'une superposition de tôles métalliques ayant par exemple la forme sensiblement triangulaire donnée à la figure 7, de façon à présenter une grande rigidité dans le sens de son épaisseur et une certaine flexibilité dans une direction perpendiculaire au plan des tôles. Les vis 86 traversent des ouvertures 90 présentes à mi-longueur des côtés du support 84.

Les supports 84 sont fixés par ailleurs par des vis 88 à un élément 92 faisant partie du corps 19 de la broche 10, grâce à des ouvertures 93 présentes au niveau de leurs sommets, comme visible sur la figure 7.

La flexibilité des supports 84 autorise le débattement axial du boîtier 83 nécessaire pour permettre les oscillations axiales de l'arbre 12, tout en maintenant le boîtier 83 centré relativement au corps 19 de la broche 10.

Le palier arrière 16 reprend une construction similaire, avec des roulements à billes 95 et 96 en appui à une extrémité contre un épaulement de l'arbre 12 et à l'extrémité opposée contre un boîtier 97.

Deux supports 84 identiques à ceux du palier avant sont fixés sur ce boîtier 97 grâce aux ouvertures 90. Les supports 84 du palier arrière sont immobilisés sur un élément 101 du corps de la broche par des vis 102 engagées dans les ouvertures 93 des supports 84.

De même que pour le palier avant, la flexibilité des tôles des supports 84 autorise un débattement axial du palier arrière au niveau des roulements 95 et 96, tout en assurant le centrage de ces derniers.

Les actionneurs piézoélectriques 24 viennent en appui, par l'intermédiaire de pièces de transmission 107 en forme de T en section axiale, autorisant une répartition de l'effort sur l'ensemble de la face avant des actionneurs et une compensation d'un désalignement éventuel, contre le boîtier 83 du palier avant.

Les actionneurs 24 de l'un des étages viennent en appui à l'arrière, par l'intermédiaire d'une pièce 110, contre l'organe de liaison 18. La pièce 110 peut comporter, comme illustré, un joint 111 de centrage de l'actionneur.

Le montage des actionneurs 22 de l'autre étage est similaire, comme on peut le voir notamment sur la figure 5, ces derniers venant en appui à l'arrière par les pièces de transmission 107 contre une pièce d'appui 113 faisant partie du corps 19 de la broche, et à l'avant contre l'organe de liaison 18. La pièce d'appui 113 est creuse et loge un système de précharge 30 constitué dans l'exemple considéré par des piles de rondelles Belleville traversées par des tirants respectifs 120.

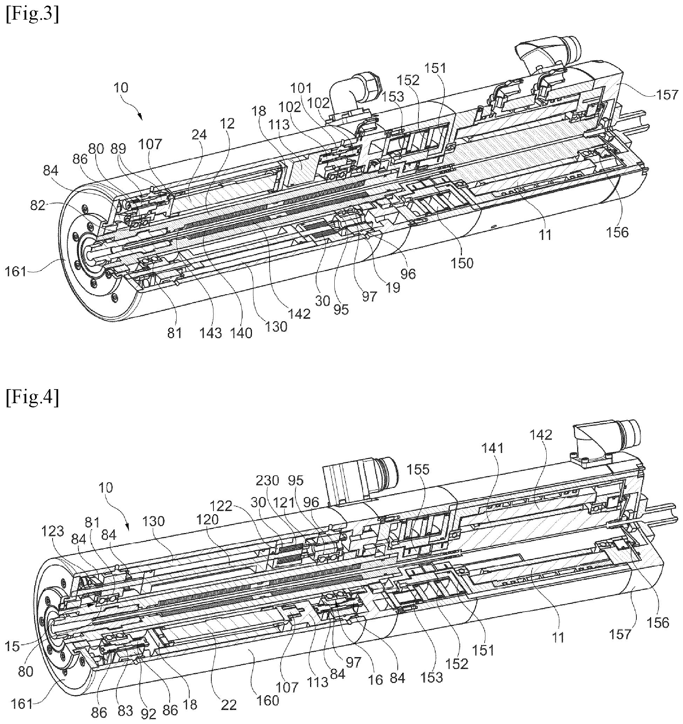

Chaque pile de rondelles élastiques 230 est comprimée entre un écrou 121 engagé sur le tirant 120 et le fond 122 du logement de la pièce d'appui 113 qui la reçoit, comme on peut le voir sur la figure 4 notamment.

Chaque tirant 120 vient en appui par l'intermédiaire d'un écrou 123 sur la face avant du boîtier 83 et exerce ainsi une traction dirigée vers l'arrière sur celle-ci.

Chaque tirant traverse les supports 84 librement grâce aux ouvertures réalisées dans ceuxci entre celles servant au passage des vis de fixation précitées.

Les rondelles élastiques 230 assurent ainsi la précharge nécessaire des actionneurs piézoélectriques.

Une pièce métallique formant entretoise 130, en forme de manchon, est disposée autour de l'organe de liaison 18, venant en appui axialement à une extrémité contre la pièce d'appui 113 et à l'autre extrémité contre l'élément de fixation 92.

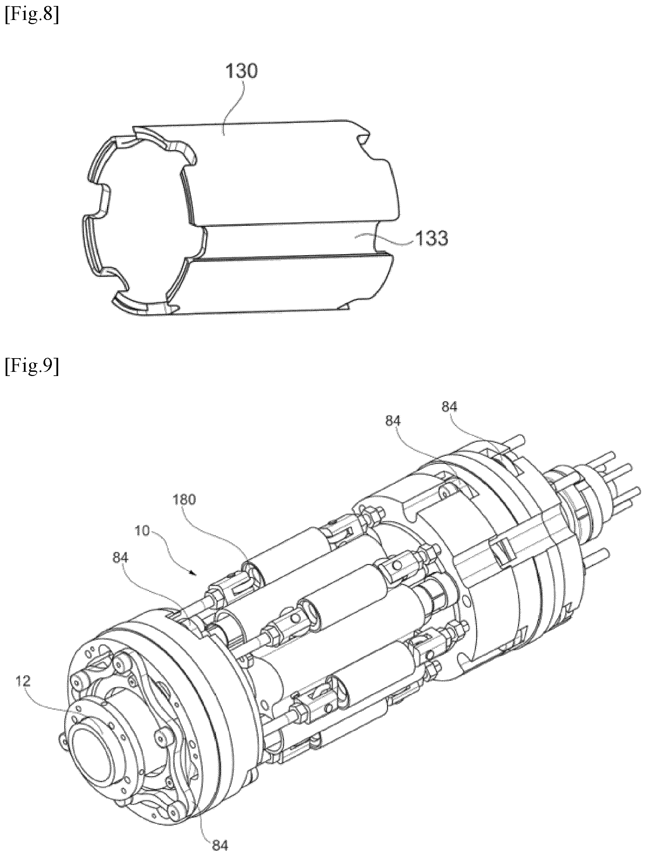

Cette pièce 130 formant entretoise peut comporter, comme illustré à la figure 8, des rainures longitudinales 133 sur sa surface radialement extérieure, pour le passage de câbles électriques d'alimentation des actionneurs piézoélectriques et/ou de câbles reliés à des capteurs.

Ces rainures 133 peuvent également faciliter la circulation d'air de refroidissement au sein de la broche 10.

L'arbre 12 est creux, et traversé longitudinalement par une tige d'actionnement 140 du porte-outil monté sur la broche 10. La tige 140 est également creuse, pour l'amenée d'un fluide de coupe à l'outil.

La tige 140 est maintenue en position de verrouillage par un empilement de rondelles élastiques 142, prenant appui axialement contre un épaulement 143 de l'arbre 12.

Pour déverrouiller l'outil (non représenté) une poussée vers l'avant est exercée sur la tige 140 par un système de déverrouillage pneumatique 150, comportant trois chambres 151, 152 et 153 cumulant leurs effets sur une pièce de transmission 154.

Dans l'exemple illustré, ce système de déverrouillage 150 se situe axialement entre la partie excitatrice située à l'avant de la broche comportant les actionneurs piézoélectriques et le moteur 11.

Ce dernier comporte un rotor à aimants permanents 141 et un stator 142, refroidi par liquide.

L'arbre du rotor 141 est relié à l'arbre 12 de la broche 12 par un système d'accouplement élastique 155, permettant une transmission du couple et un débattement axial entre les deux arbres. Ce système 155 comporte deux pièces métalliques ayant des dents qui s'emboîtent, à la manière d'un crabot, avec des coussinets en élastomère entre les dents.

Le moteur 11 comporte à l'arrière un codeur 156, qui permet de connaître précisément la position angulaire de l'arbre. Les actionneurs piézoélectriques sont avantageusement pilotés en fonction de l'information fournie par ce codeur.

La broche 10 comporte un carter cylindrique 160 en plusieurs tronçons, fermé à l'avant par un flasque avant 161 et à l'arrière par un flasque arrière 157 logeant le codeur 156.

Bien entendu, on peut apporter de nombreuses modifications à la broche 10 sans sortir du cadre de la présente invention.

On va ainsi décrire en référence aux figures 9 à 12 une variante de broche 10 qui diffère de celle qui vient d'être décrite par la manière d'assurer la précharge des actionneurs piézoélectriques.

Dans cet exemple, le système de précharge 30 comporte des ressorts hélicoïdaux 180 travaillant en traction entre une bague 181 se déplaçant axialement avec les roulements 80, 81 du palier avant et des tirants 183 fixes relativement au corps de la broche 10.

Les actionneurs 24 viennent en appui à l'avant contre le palier avant par l'intermédiaire de transmissions à portées sphériques 184 et à l'arrière contre l'organe de liaison 18.

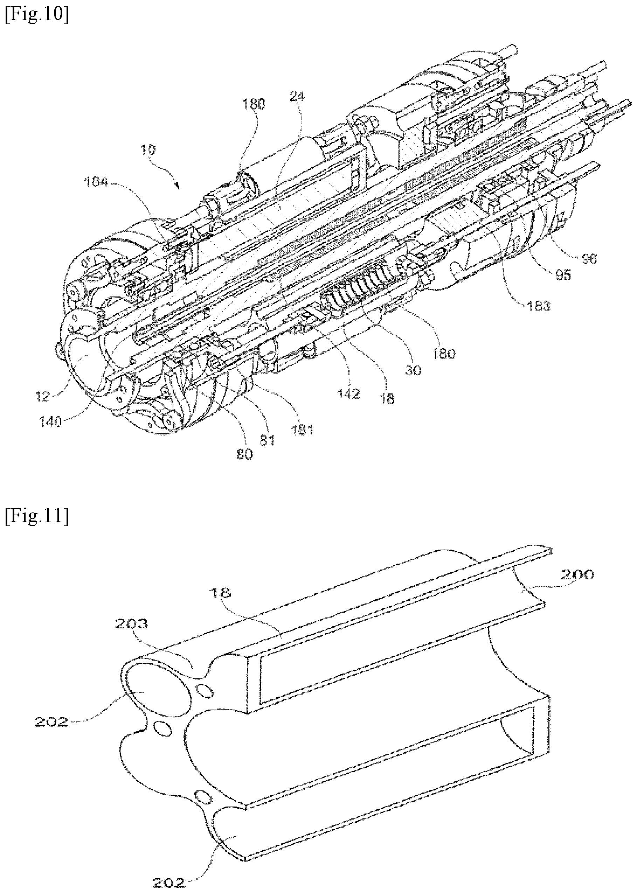

Ce dernier a été représenté isolément sur la figure 11.

Il se présente ici sous la forme d'une pièce monobloc comportant des logements 200 ouverts vers l'arrière, pour recevoir les actionneurs piézoélectriques 22, et des logements 202 ouverts vers l'avant, pour recevoir les actionneurs 24. Des gorges 203 sont formées à l'extérieur de la pièce pour recevoir les ressorts 180.

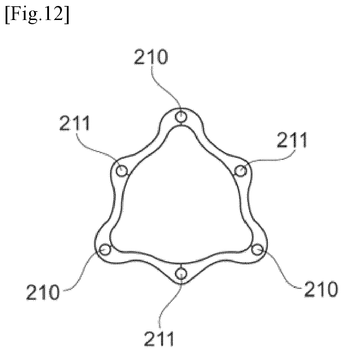

Les paliers avant et arrière présentent des supports 84 dont la forme, illustrée à la figure 12, est différente de celle des supports 84 de l'exemple décrit précédemment.

Les supports 84 présentent une forme ondulée, avec des ouvertures 210 permettant le passage de vis d'immobilisation axiale sur le corps de la broche 10, et des ouvertures 211 pour le passage de vis de fixation du boîtier de roulements.

Les creux formés entre les ouvertures 210 et 211 permettent le passage des câbles électriques, si nécessaire.

Dans cet exemple, le moteur 11, non représenté, est situé juste derrière le palier arrière, le système de desserrage du porte-outil étant situé tout à l'arrière de la broche 10, après le moteur 11.

On peut apporter encore d'autres modifications à la broche sans sortir du cadre de la présente invention.

Par exemple, la broche ne comporte plus de moteur mais est entraînée par une poulie et un moteur déporté de la machine.

La broche peut être utilisée sur un bras robotisé plutôt qu'une machine à commande numérique.

Les roulements à billes peuvent être remplacés par des roulements à rouleaux.

## Revendications

1. Broche (10) pour réaliser un usinage assisté par des oscillations axiales non ultrasoniques, comportant :
- un arbre porte outil (12), et
- une partie excitatrice, pour soumettre l'arbre à des oscillations axiales non ultrasoniques, notamment durant sa rotation, cette partie excitatrice comportant :
o un premier étage excitateur, comportant au moins un actionneur piézoélectrique (24),
o un deuxième étage excitateur, comportant au moins un actionneur piézoélectrique (22), les actionneurs des deux étages étant disposés de façon à additionner leurs effets,
et **caractérisée en ce que** le deuxième étage excitateur a un recouvrement axial non nul avec le premier étage excitateur.

2. Broche selon la revendication 1, comportant :
- un corps (19),
- un palier avant (15) au moins partiellement mobile axialement relativement au corps,
- un palier arrière (16) au moins partiellement mobile axialement relativement au corps,
- l'arbre porte outil (12) étant mobile axialement relativement au corps, le déplacement axial au moins partiel des paliers s'accompagnant d'un déplacement axial de l'arbre porte outil,
- le premier étage excitateur, statique, agissant entre un organe de liaison intermédiaire et le corps
- le deuxième étage excitateur, statique, agissant entre l'un des paliers et l'organe de liaison intermédiaire (18).

3. Broche selon l'une des revendications 1 et 2, les actionneurs piézoélectriques d'un étage alternant, de manière angulairement équirépartie, autour de l'axe longitudinal (X) de la broche, avec ceux de l'autre étage.

4. Broche selon l'une quelconque des revendications 1 à 3, comportant un système de précharge axiale (30) pour solliciter l'arbre porte-outil en déplacement axial inverse de celui provoqué par l'excitation des actionneurs, de préférence, le système de précharge axial travaillant en compression, et comportant de préférence plusieurs ensembles de rondelles élastiques.

5. Broche selon l'une des revendications précédentes, dont une combinaison avec la revendication 2, l'organe de liaison intermédiaire (18) comportant des logements alternativement ouverts vers une extrémité axiale de la broche et vers l'extrémité opposée, les actionneurs piézoélectriques étant reçus dans ces logements.

6. Broche selon l'une quelconque des revendications précédentes, dont une combinaison avec la revendication 2, l'un au moins des paliers, et mieux chaque palier, comportant au moins un roulement maintenu par un support flexible pouvant fléchir sous l'effet de la force générée par les actionneurs piézoélectriques pour permettre un déplacement axial de l'arbre, tout en maintenant la position radiale du roulement inchangée relativement au corps, de préférence, le support flexible présentant une structure lamellaire avec des lamelles orientées transversalement, notamment perpendiculairement, à l'axe de rotation de l'arbre, de préférence, chaque support étant fixé d'une part au corps en des points de fixation, et d'autre part, en des emplacements décalés angulairement desdits points de fixation autour de l'axe de rotation de l'arbre, à un boîtier de roulements, de préférence, chaque palier comportant deux supports flexibles disposés de part et d'autre du ou des roulements.

7. Broche selon l'une quelconque des revendications précédentes, chaque étage d'actionneurs piézoélectriques comportant entre 2 et 4 actionneurs, mieux 3 actionneurs.

8. Broche selon l'une quelconque des revendications précédentes, chaque actionneur piézoélectrique transmettant sa poussée, à l'une au moins de ses extrémités axiales, via une pièce de transmission flexible, l'actionneur piézoélectrique venant en appui sur cette pièce.

9. Broche selon l'une quelconque des revendications précédentes, les actionneurs piézoélectriques étant refroidis par une circulation d'air comprimé.

10. Broche selon l'une quelconque des revendications précédentes, en combinaison avec la revendication 2, comportant un manchon (130) formant entretoise, entourant les actionneurs piézoélectriques, le palier avant (15) venant axialement en appui contre ce manchon, de préférence, le manchon (130) présentant des rainures longitudinales (133) sur sa surface radialement extérieure, dans lesquelles des câbles électriques d'alimentation des actionneurs et/ou reliés à des capteurs, sont engagés, le manchon (130) étant de préférence métallique.

11. Broche selon l'une quelconque des revendications précédentes, comportant un système de desserrage pour agir sur le serrage du porte-outil, ce système de desserrage étant disposé entre le moteur et les actionneurs piézoélectriques, de préférence, le système de desserrage étant pneumatique et comportant plusieurs chambres de pression successives (151, 152, 153).

12. Procédé de perçage ou d'usinage de forme, dans lequel on entraîne en rotation un outil à l'aide de la broche (10) définie dans l'une quelconque des revendications précédentes, et dans lequel on soumet l'outil simultanément à sa rotation à des oscillations axiales non ultrasoniques, en excitant périodiquement les actionneurs piézoélectriques, de préférence, les deux étages d'actionneurs étant excités simultanément, de préférence, seul un étage d'actionneurs étant excité.

13. Procédé selon la revendication précédente, la broche étant montée sur une machine à commande numérique ou un effecteur.

14. Procédé selon l'une des revendications 12 ou 13, la fréquence des oscillations axiales étant comprise entre 0 et 350 Hz.

15. Procédé selon l'une quelconque des revendications 12 à 14, la broche étant déplacée axialement durant le perçage ou l'usinage de forme, l'avance au tour de la broche et l'amplitude crête à crête des oscillations axiales étant du même ordre de grandeur.

## Patentansprüche

1. Spindel (10) zum Durchführen einer Bearbeitung, die durch axiale, ultraschallfreie Oszillationen unterstützt wird, umfassend:
- eine Werkzeughalterwelle (12) und
- einen Erregerteil, um die Welle, insbesondere während ihrer Drehung, axialen, ultraschallfreien Oszillationen auszusetzen, wobei dieser Erregerteil Folgendes umfasst:
o eine erste Erregerstufe, die mindestens einen piezoelektrischen Aktuator (24) umfasst,
o eine zweite Erregerstufe, die mindestens einen piezoelektrischen Aktuator (22) umfasst,
wobei die Aktuatoren der zwei Stufen so angeordnet sind, dass sich ihre Wirkungen addieren,
und **dadurch gekennzeichnet, dass** die zweite Erregerstufe mit der ersten Erregerstufe eine axiale Überlappung ungleich Null aufweist.

2. Spindel nach Anspruch 1, umfassend:
- einen Körper (19),
- eine vordere Lagerstelle (15), die relativ zu dem Körper mindestens teilweise axial beweglich ist,
- eine hintere Lagerstelle (16), die relativ zu dem Körper mindestens teilweise axial beweglich ist,
- wobei die Werkzeughalterwelle (12) relativ zu dem Körper axial beweglich ist, wobei die mindestens teilweise axiale Verschiebung der Lagerstellen zu einer axialen Verschiebung der Werkzeughalterwelle hinzukommt,
- wobei die erste, statische Erregerstufe zwischen einem zwischengeschalteten Verbindungsorgan und dem Körper wirkt,
- wobei die zweite, statische Erregerstufe zwischen einer der Lagerstellen und dem zwischengeschalteten Verbindungsorgan (18) wirkt.

3. Spindel nach einem der Ansprüche 1 und 2, wobei sich die piezoelektrischen Aktuatoren einer Stufe auf eine winkelförmig gleichmäßig verteilte Weise rund um die Längsachse (X) der Spindel herum mit denjenigen der anderen Stufe abwechseln.

4. Spindel nach einem beliebigen der vorhergehenden Ansprüche 1 bis 3, umfassend ein System (30) zum axialen Vorspannen, um die Werkzeughalterwelle in eine axiale Verschiebung vorzuspannen, die zu derjenigen entgegengesetzt ist, die durch die Erregung der Aktuatoren erzeugt wird, wobei vorzugsweise das System zum axialen Vorspannen auf Druck arbeitet und vorzugsweise mehrere Sätze Federscheiben umfasst.

5. Spindel nach einem der vorhergehenden Ansprüche, darunter eine Kombination mit Anspruch 2, wobei das zwischengeschaltete Verbindungsorgan (18) Aufnahmen umfasst, die wechselweise zu einem axialen Ende der Spindel und zu dem entgegengesetzten Ende offen sind, wobei die piezoelektrischen Aktuatoren in diesen Aufnahmen aufgenommen sind.

6. Spindel nach einem beliebigen der vorhergehenden Ansprüche, darunter eine Kombination mit Anspruch 2, wobei mindestens eine der Lagerstellen, und bevorzugt jede Lagerstelle, mindestens ein Lager umfasst, das durch einen flexiblen Träger gehalten wird, der unter der Einwirkung der durch die piezoelektrischen Aktuatoren generierten Kraft biegbar ist, um eine axiale Verschiebung der Welle zu gestatten, dabei aber die radiale Position des Lagers relativ zu dem Körper unverändert aufrecht erhält, wobei vorzugsweise der flexible Träger eine Lamellenstruktur mit zu der Drehachse der Welle quer, insbesondere senkrecht, ausgerichteten Lamellen aufweist, wobei vorzugsweise jeder Träger einerseits an Befestigungspunkten mit dem Körper und andererseits an Stellen, die um die Drehachse der Welle herum zu den Befestigungspunkten winkelförmig versetzt sind, mit einem Lagergehäuse verbunden ist, wobei vorzugsweise jede Lagerstelle zwei flexible Träger umfasst, die auf beiden Seiten des oder der Lager angeordnet sind.

7. Spindel nach einem beliebigen der vorhergehenden Ansprüche, wobei jede Stufe piezoelektrischer Aktuatoren zwischen 2 und 4 Aktuatoren, bevorzugt 3 Aktuatoren, umfasst.

8. Spindel nach einem beliebigen der vorhergehenden Ansprüche, wobei jeder piezoelektrische Aktuator an mindestens einem seiner axialen Enden seinen Schub über ein flexibles Übertragungselement überträgt, wobei der piezoelektrische Aktuator an diesem Element zur Anlage kommt.

9. Spindel nach einem beliebigen der vorhergehenden Ansprüche, wobei die piezoelektrischen Aktuatoren durch zirkulierende Druckluft gekühlt werden.

10. Spindel nach einem beliebigen der vorhergehenden Ansprüche in Kombination mit Anspruch 2, umfassend eine Hülse (130), die ein Abstandselement bildet und die piezoelektrischen Aktuatoren umgibt, wobei die vordere Lagerstelle (15) an dieser Hülse axial zur Anlage kommt, wobei vorzugsweise die Hülse (130) auf ihrer radial außenliegenden Oberfläche Längsnuten (133) aufweist, in denen elektrische Versorgungskabel für die Aktuatoren und/oder mit Sensoren verbundene Kabel eingebracht sind, wobei die Hülse (130) vorzugsweise aus Metall ist.

11. Spindel nach einem beliebigen der vorhergehenden Ansprüche, umfassend ein Lösesystem, um auf die Einspannung des Werkzeughalters einzuwirken, wobei dieses Lösesystem zwischen dem Motor und den piezoelektrischen Aktuatoren angeordnet ist, wobei vorzugsweise das Lösesystem pneumatisch ist und mehrere aufeinanderfolgende Druckkammern (151, 152, 153) umfasst.

12. Verfahren zum Bohren oder zur Formbearbeitung, bei dem ein Werkzeug mit Hilfe der Spindel (10), die in einem beliebigen der vorhergehenden Ansprüche definiert ist, in Drehung versetzt wird und bei dem das Werkzeug zeitgleich zu seiner Drehung axialen, ultraschallfreien Oszillationen ausgesetzt wird, indem die piezoelektrischen Aktuatoren periodisch erregt werden, wobei vorzugsweise die zwei Aktuatorstufen zeitgleich erregt werden, wobei vorzugsweise nur eine Aktuatorstufe erregt wird.

13. Verfahren nach dem vorhergehenden Anspruch, wobei die Spindel in einer numerisch gesteuerten Maschine oder einem Effektor montiert ist.

14. Verfahren nach einem der Ansprüche 12 oder 13, wobei die Frequenz der axialen Oszillationen zwischen 0 und 350 Hz beträgt.

15. Verfahren nach einem beliebigen der Ansprüche 12 bis 14, wobei die Spindel während des Bohrens oder der Formbearbeitung axial verschoben wird, wobei der Vorschub pro Umdrehung der Spindel und die Spitze-zu-Spitze-Amplitude der axialen Oszillationen die gleiche Größenordnung aufweisen.

## Claims

1. Spindle (10) for performing machining assisted by non-ultrasonic axial oscillations, comprising:
- a tool-holding shaft (12), and
- an exciter part, for subjecting the shaft to non-ultrasonic axial oscillations, notably during its rotation, this exciter part comprising:
o a first exciter stage, comprising at least one piezoelectric actuator (24),
o a second exciter stage, comprising at least one piezoelectric actuator (22),
the actuators of the two stages being disposed so as to add together their effects,
and **characterized in that** the second exciter stage has a non-zero axial overlap with the first exciter stage.

2. Spindle according to Claim 1, comprising:
- a body (19),
- a front bearing (15) that is at least partially axially mobile relative to the body,
- a rear bearing (16) that is at least partially axially mobile relative to the body,
- the tool-holding shaft (12) being axially mobile relative to the body, the at least partial axial displacement of the bearings being accompanied by an axial displacement of the tool-holding shaft,
- the first exciter stage, which is static, acting between an intermediate link member and the body,
- the second exciter stage, which is static, acting between one of the bearings and the intermediate link member (18).

3. Spindle according to either of Claims 1 and 2, the piezoelectric actuators of one stage alternating, in an angularly equidistributed manner, about the longitudinal axis (X) of the spindle, with those of the other stage.

4. Spindle according to any one of Claims 1 to 3, comprising an axial preloading system (30) for stressing the tool-holding shaft in axial displacement that is the reverse of that provoked by the excitation of the actuators, preferably, the axial preloading system working in compression, and preferably comprising a plurality of sets of elastic washers.

5. Spindle according to one of the preceding claims, including a combination with Claim 2, the intermediate link member (18) comprising recesses that are alternately open towards an axial end of the spindle and towards the opposite end, the piezoelectric actuators being received in these recesses.

6. Spindle according to any one of the preceding claims, including a combination with Claim 2, at least one of the bearings, and better still each bearing, comprising at least one rolling bearing held by a flexible support that can bend under the effect of the force generated by the piezoelectric actuators so as to allow an axial displacement of the shaft, while at the same time keeping the radial position of the rolling bearing unchanged relative to the body, preferably, the flexible support having a lamellar structure with lamellae oriented transversely, notably at right angles, to the axis of rotation of the shaft, preferably, each support being fastened on the one hand to the body at fastening points, and on the other hand, at locations offset angularly from said fastening points about the axis of rotation of the shaft, to a rolling bearing housing, preferably, each bearing comprising two flexible supports disposed on either side of the one or more rolling bearings.

7. Spindle according to any one of the preceding claims, each stage of piezoelectric actuators comprising between 2 and 4 actuators, better still 3 actuators.

8. Spindle according to any one of the preceding claims, each piezoelectric actuator transmitting its thrust, at at least one of its axial ends, via a flexible transmission piece, the piezoelectric actuator coming to bear on this piece.

9. Spindle according to any one of the preceding claims, the piezoelectric actuators being cooled by a circulation of compressed air.

10. Spindle according to any one of the preceding claims, in combination with Claim 2, comprising a spacerforming sleeve (130), surrounding the piezoelectric actuators, the front bearing (15) coming axially to bear against this sleeve, preferably, the sleeve (130) having longitudinal grooves (133) on its radially outer surface, in which electrical power supply cables of the actuators and/or linked to sensors are engaged, the sleeve (130) being preferably metallic.

11. Spindle according to any one of the preceding claims, comprising a release system for acting on the clamping of the tool-holder, this release system being disposed between the motor and the piezoelectric actuators, preferably, the release system being pneumatic and comprising a plurality of successive pressure chambers (151, 152, 153).

12. Drilling or form-machining method, wherein a tool is driven in rotation using the spindle (10) defined in any one of the preceding claims, and wherein the tool is subjected, simultaneously with its rotation, to non-ultrasonic axial oscillations, by periodically exciting the piezoelectric actuators, preferably, the two stages of actuators being excited simultaneously, preferably, only one stage of actuators being excited.

13. Method according to the preceding claim, the spindle being mounted on a numerically-controlled machine or an effector.

14. Method according to either of Claims 12 and 13, the frequency of the axial oscillations being between 0 and 350 Hz.

15. Method according to any one of Claims 12 to 14, the spindle being displaced axially during the drilling or the form-machining, the feed per revolution of the spindle and the peak-to-peak amplitude of the axial oscillations being of the same order of magnitude.
